# EUROPÄISCHE PATENTSCHRIFT

(11) **EP 0 759 319 B1**
(45) Veröffentlichungstag und Bekanntmachung des Hinweises auf die Patenterteilung: **20.10.1999**
(21) Anmeldenummer: 96112908.7
(22) Anmeldetag: 10.08.1996
(51) Int. Cl.: B01D 46/52

(54) **Plattenförmiger Filtereinsatz und Verfahren zu seiner Herstellung**
Plate-shaped filter element and process for producing the same
Elément filtrant en forme de plaque et son procédé de fabrication

(30) Priorität: 18.08.1995 DE 19530435
(43) Veröffentlichungstag der Anmeldung: 26.02.1997
(73) Patentinhaber: KNECHT FILTERWERKE GMBH, 70376 Stuttgart (DE)
(72) Erfinder: Baumann, Peter, 70565 Stuttgart (DE); Schneider, Horst, 71336 Waiblingen (DE); Waibel, Hans, 70378 Stuttgart (DE)
(74) Vertreter: Patentanwalts-Partnerschaft Rotermund + Pfusch

(56) Entgegenhaltungen:
- EP-A- 0 450 299
- WO-A-94/01200
- WO-A-94/11089
- DE-A- 4 133 175
- DE-A- 4 323 522
- US-A- 3 695 012
- US-A- 4 439 219

## Beschreibung

Die Erfindung betrifft einen plattenförmigen Filtereinsatz aus zick-zack-förmig gefaltetem Bahnenmaterial für insbesondere Fahrzeugkabinenluftfilter, nach dem Oberbegriff des Patentanspruchs 1 sowie ein Verfahren zu seiner Herstellung.

Filtereinsätze dieser Art sollen mit möglichst wenig Dichtungsmaterial auskommen und insbesondere keinen aufwendigen starren Dichtrahmen benötigen. Ein dichter Abschluß des Filtereinsatzes in einem Filtergehäuse erfolgt bei derartigen Filtereinsätzen dadurch, daß die Dichtung in Plattenebene gegenüber dem Filtergehäuse erfolgt, wozu der Filtereinsatz mit einem umlaufenden elastischen Dichtmaterial versehen ist. Dieses Dichtmaterial wird zur Erzielung der Dichtwirkung in Plattenebene zwischen dem Filtereinsatz und dem Filtergehäuse verpreßt. Durch dieses Verpressen entstehen in Plattenebene Kräfte, die von dem Filtereinsatz aufgenommen werden müssen. Bei den Seiten-Dichtungen des Filtereinsatzes ist bereits durch die Steifheit der Falten des Bahnenmaterials ein ausreichender Widerstand des Filtereinsatzes gegen eine Verformung durch die in Plattenebene wirkenden Dichtungskräfte gegeben. Anders sieht dies bei den End-Dichtungen aus. Hier muß die Steifigkeit von der End-Dichtung selber aufgebracht werden, da das Bahnenmaterial in Faltrichtung nachgibt.

Hiervon ausgehend beschäftigt sich die Erfindung mit dem Problem, mit möglichst einfachen Mitteln und unter geringem Materialeinsatz eine möglichst verbiegesteife End-Dichtung zu schaffen, bei der gleichzeitig eine dichte Verbindung zwischen den End-Dichtungen und dem Bahnenmaterial rationell erreichbar ist. Des weiteren soll das gesamte Dichtungsmaterial für eine gute Entsorgbarkeit aus zu dem Bahnenmaterial entsorgungstechnisch gleichartigem Material bestehen.

Eine Lösung zu diesem Problem zeigt die Ausführung eines gattungsgemäßen Filtereinsatzes mit den kennzeichnenden Merkmalen des Patentanspruchs 1 auf.

Zweckmäßige Ausgestaltungen des erfindungsgemäßen Filtereinsatzes beschreiben die Unteransprüche.

Die Erfindung beruht auf dem Gedanken, wenigstens eine halbe bzw. eine oder mehrere vollständige Falten, die jeweils an die End-Dichtungen angrenzen, in eine U-Profilleiste so einzustecken, daß ein zumindest überwiegend dichter Abschluß gegeben ist. Es entsteht nämlich bereits durch einfaches, loses, unverspanntes bzw. klemmfreies Einstecken des jeweiligen Endes des Bahnenmaterials in den U-Schlitz der U-Profilleiste eine Art Labyrinth-Dichtung, die in vielen Fällen, in denen kein extrem hoher und sicherer Abscheidegrad notwendig ist, bereits ausreicht. Eine Erhöhung der Dichtwirkung läßt sich bei der erfindungsgemäß vorgeschlagenen U-Profilleiste noch dadurch erreichen, daß wenigstens eine komplette Filterbahnfalte bzw. möglichst sogar zwei bis drei vollständige Filterfalten in den U-Schlitz unter Preßdruck eingesteckt werden.

Die erfindungsgemäß vorgesehene U-Profilleiste besitzt eine hohe Steifigkeit gegen Verbiegen und nimmt mit Rücksicht darauf, daß in ihrem U-Schlitz das Bahnenmaterialende eingesteckt werden kann, nur sehr geringen Bauraum ein. Wegen der hohen Biegesteifigkeit, die die Form eines U-Profils bietet, kann die Profilleiste aus einfachem und kostengünstigem Material bestehen, das beispielsweise Papiermaterial sein kann. Als Papiermaterial besonders geeignet ist Pappe. Pappe, wie jedes andere Papiermaterial, hat insbesondere den Vorteil, entsorgungstechnisch gleichartig mit dem Filterbahnmaterial sein zu können. Dies ist für eine umweltfreundliche Entsorgung eines Filtereinsatzes äußerst wichtig.

In Fällen, in denen eine hohe Filtrationssicherheit erwünscht ist, kann dies erfindungsgemäß dadurch gelöst werden, daß die letzte Halbfalte in gekürzter Form um den nach außen weisenden U-Schenkel des U-Profiles umgelegt ist und dort mit einem elastischen Dichtmaterial dicht gegenüber dem außenliegenden U-Schenkel abgedichtet ist.

Ein erfindungsgemäßer Filtereinsatz läßt sich äußerst wirtschaftlich herstellen mit einem Verfahren nach Anspruch 6.

Bei diesem Herstellungsverfahren wird zunächst ein endloses Band aus gefaltetem Filterbahnenmaterial mit seitlichen Dichtungen hergestellt. Von diesem endlosen Band werden einzelne den herzustellenden Filtereinsätzen längenmäßig entsprechende Stücke abgeschnitten, wobei vorzugsweise längs der Faltenrücken der Falten die jeweiligen Trennschnitte durchgeführt werden. Es ist dann zur Herstellung eines Filtereinsatzes nur noch notwendig, U-Profilleisten auf die jeweils letzten Falten bzw. Halbfalten aufzuschieben, ohne dabei einen Klemmschluß zwischen dem eingesteckten Faltenabschnitt und den Wänden des U-Schlitzes zu bewirken. Die U-Profilleisten liegen vielmehr nur lose, frei beweglich auf dem eingesteckten Faltenabschnitt auf. Die U-Profilleisten werden sodann mit den bereits vorhandenen Seitendichtungen fest verbunden. Diese feste Verbindung kann beispielsweise durch Kleben oder Verschweißen erfolgen. Wichtig für die erfindungsgemäße rationelle Herstellbarkeit ist lediglich, daß das Seitendichtungsmaterial bei den abgelängten Bahnenmaterialstücken bereits vorhanden ist und damit ohne zusätzlichen Aufwand mit den einzuführenden U-Profilleisten verbunden werden kann.

Um in ein Filtergehäuse in Richtung der Plattenebene dicht eingesetzt werden zu können, wird ein Filtereinsatz mit seitlichen Dichtfolien und endseitigen Profilleisten mit einem umlaufend elastischen Dichtmaterial versehen. Dieses Dichtmaterial kann bei einem Fahrzeugkabinenluftfilter beispielsweise ein Schaumstoffstreifen sein.

Soweit aus WO 94/11089 ein Filtereinsatz aus plattenförmig gefaltetem Bahnenmaterial bekannt ist, das an seinen in Faltrichtung liegenden Enden in jeweils ein U-Profilteil eingesteckt ist, handelt es sich dort um ein kraftschlüssiges Einklemmen. Dieses Einklemmen verhindert das erfindungsgemäß angestrebte und gelöste Problem einer rationellen, einfachen und damit kostengünstigen Herstellbarkeit des Filtereinsatzes.

Ausführungsbeispiele der Erfindung sind in der Zeichnung dargestellt.

Es zeigen:
- Fig. 1: einen Plattenfiltereinsatz in Draufsicht,
- Fig. 2: einen Schnitt durch den Plattenfilter-Einsatz nach Linie II-II in Fig. 1,
- Fig. 3: einen Schnitt durch eine U-Profilleiste in vergrößerter Darstellung,
- Fig. 4: einen Schnitt durch eine alternativ geformte U-Profilleiste mit mehreren eingesteckten Falten,
- Fig. 5: einen Schnitt durch eine U-Profilleiste mit einem am äußeren U-Schenkel dicht befestigten Bahnenmaterial.

Von einer endlosen Bahn abgelängtes Bahnenmaterial 1 ist an den seitlichen Stirnkanten durch einen aufgeschweißten Folienstreifen 2 als Seiten-Dichtungen (S) gedichtet.

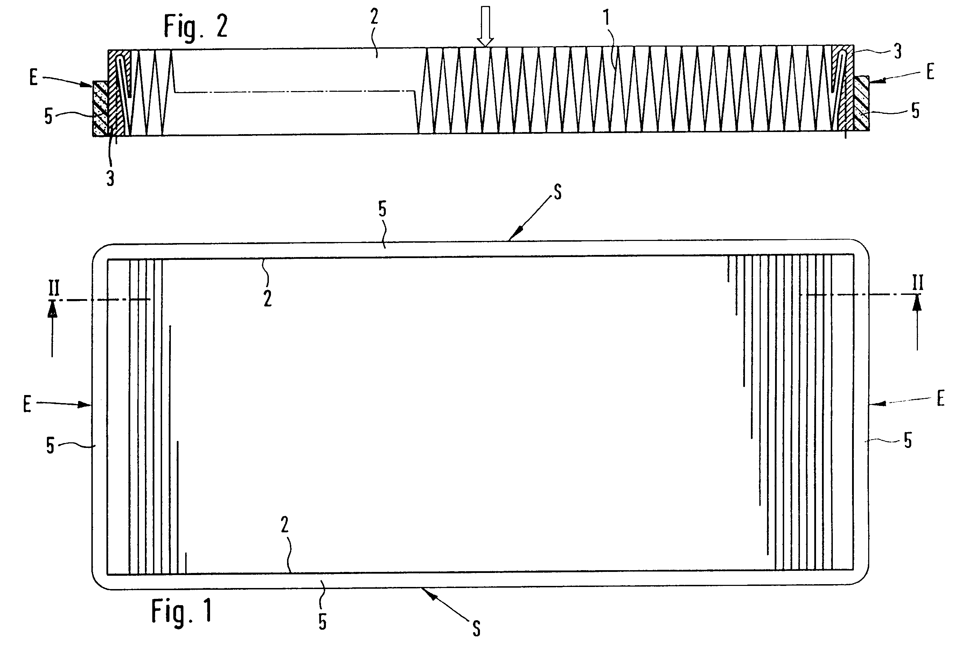

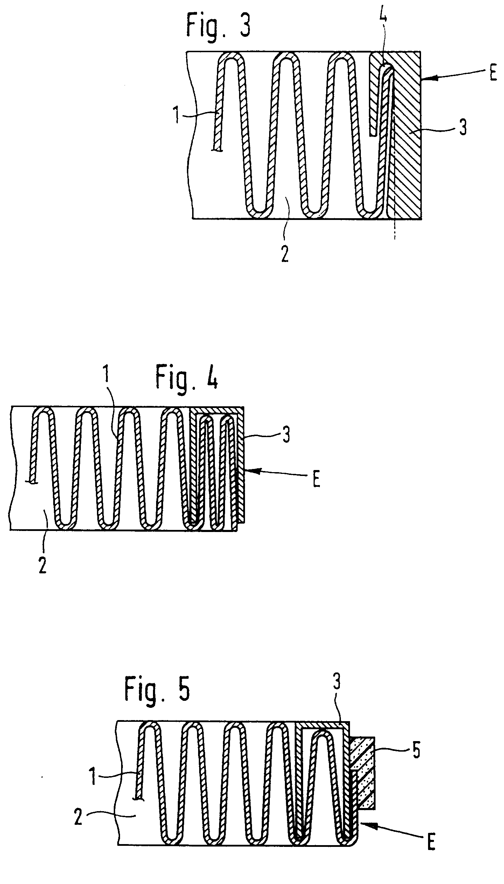

Die End-Dichtungen (E) werden zum Teil gebildet aus einer U-Profilleiste 3. Die U-Schenkel dieser Profilleiste können wie in den Fig. 4 und 5 dargestellt gleich lang oder wie in den Fig. 2 und 3 wiedergegeben, ungleich lang sein.

In den U-Schlitz 4 der U-Profilleiste 3 ist bei der Ausführung nach den Fig. 1 bis 3 jeweils nur eine Halbfalte lose eingesteckt. Die U-Profilleiste 3 ist an ihren Stirnseiten mit den seitlichen Folienstreifen 2, die beim Abtrennen der einzelnen Teilstücke von einer Endlosbahn stehengeblieben sind, jeweils dicht verschweißt. Der Bereich, bis zu dem die Folienstreifen 2 an der Stirnseite einer U-Profilleiste 3 reichen, ist in der Fig. 2 strichpunktiert angegeben.

Für eine dichte Anlage in der Plattenfilterebene in einem Filtergehäuse ist der Plattenfiltereinsatz mit einem umlaufenden elastischen Dichtungsmaterial 5 versehen.

Durch die biegesteife U-Form der endseitigen U-Profilleisten kann die End-Dichtung in dem Filtergehäuse nicht in Faltrichtung nachgeben und damit dort zu einer undichten Anlage in dem Filtergehäuse führen.

Eine Ausführungsform, bei der zwei Endfalten eines Bahnenmaterials innerhalb des U-Schlitzes 4 einer U-Profilleiste 3 liegen, zeigt die Fig. 4 auf. Beim Einstecken mehrerer Endfalten ist es möglich, diese in Faltrichtung gegeneinander zu verpressen und dadurch eine relativ hohe Dichtwirkung zu erzielen. Aber auch bereits bei dem Einschieben nur einer Halbfalte in den U-Schlitz 4 einer U-Profilleiste 3 gemäß den Fig. 2 und 3 sind die Anforderungen an beispielsweise ein Fahrzeugkabinenluftfilter in der Regel bereits ausreichend erfüllt. Dies haben Versuche gezeigt, nach denen auszufilternde Staubpartikel auch bei einer solchen Ausführung an den Einfaßstellen der Materialbahnenenden den Filtereinsatz gewöhnlich nicht durchdringen.

Eine absolut sichere Dichtung zwischen der Endfalte eines Filtereinsatzes und einer U-Profilleiste 3 läßt sich gemäß der Ausführung in Fig. 5 dadurch erreichen, daß die letzte Halbfalte in längenmäßig gekürzter Form um den nach außen weisenden Schenkel der U-Profilleiste umgeschlagen und dort von aufzuklebendem elastischem Dichtmaterial 5 erfaßt und dicht mit diesem U-Schenkel verklebt wird.

Ein besonderer Vorteil des erfindungsgemäßen Filtereinsatzes besteht in seiner einfachen Herstellbarkeit, die wie folgt aussieht.

Zu einer Endlosbahn gefaltetes Filterbahnenmaterial wird an seinen Stirnseiten mit einem Folienstreifen 2 dicht verbunden. Dieses dichte Verbinden kann beispielsweise durch Aufschweißen erfolgen. Die zu einem Filtereinsatz zu verarbeitenden Bahnenmaterialstücke werden der jeweiligen Länge eines Filtereinsatzes entsprechend von der Endlosbahn abgelängt und zwar durch einen senkrecht zur Bahnlängsrichtung verlaufenden Trennschnitt. Die Trennschnitte werden vorzugsweise in die Faltenrücken gelegt. Die U-Profilleisten 3 müssen dann nur noch an den Enden des abgelängten Filterbahnmaterials auf die jeweils letzte Halbfalte, Vollfalte oder mehrere Falten lose und praktisch ohne Kraftaufwendung aufgesetzt und mit dem bereits vorhandenen Folienstreifen 2 stirnseitig fest verbunden, beispielsweise verschweißt, werden.

In einem letzten Schritt wird umlaufendes elastisches Dichtmaterial 5 auf den Filtereinsatz aufgebracht und zwar auf die Folienstreifen 2 sowie auf die U-Profilleisten 3. Dieses elastische Dichtmaterial 5 kann ein Schaumstoffstreifen sein.

Die Durchströmung des Filtereinsatzes erfolgt vorzugsweise in der durch den Pfeil in Fig. 2 angegebenen Richtung.

## Patentansprüche

1. Plattenförmiger Filtereinsatz aus zick-zack-förmig gefaltetem Bahnenmaterial, insbesondere für Fahrzeugkabinenluftfilter, mit Seiten-Dichtungen (S) an den Stirnseiten und End-Dichtungen (E) an den in Faltrichtung liegenden Enden der Falten, bei dem zumindest die End-Dichtungen bei einem Einsatz des Filtereinsatzes in ein Filtergehäuse in Plattenebene gegenüber dem Filtergehäuse gedichtet sind, **dadurch gekennzeichnet**, daß die End-Dichtungen (E) jeweils von einer U-Profilleiste (3) mit senkrecht zur Filterplattenebene ausgerichtetem U-Schlitz (4) sowie in den U-Schlitz eingesteckter, klemmfrei und unverspannt liegender endseitiger Halbfalte, Falte oder mehreren Endfalten gebildet sind, und daß die Stirnseiten der U-Profilleisten (3) mit den Seiten-Dichtungen (S) verbunden sind.

2. Filtereinsatz nach Anspruch 1, dadurch gekennzeichnet, daß ein Bestandteil der Seiten-Dichtungen (S) ein auf die Stirnkanten der Falten und der U-Profilleisfen (3) fest und dicht aufgebrachter Folienstreifen (2) ist.

3. Verfahren zur Herstellung eines Filtereinsatzes nach Anspruch 2, gekennzeichnet durch die Merkmale,
- gefaltetes stirnseitig mit dem Folienstreifen (2) gedichtetes Bahnenmaterial (1) wird auf eine dem zu fertigenden Filtereinsatz entsprechende Länge geschnitten,
- auf die endseitige Halbfalte, Falte oder mehrere Endfalten werden jeweils die U-Profilleisfen (3) aufgesteckt und mit ihren Stirnseiten fest mit dem Folienstreifen (2) verbunden.

4. Verfahren nach Anspruch 3, dadurch gekennzeichnet, daß das feste Verbinden der U-Profilleiste (3) mit dem stirnseitig gelegenen Folienstreifen (2) durch Kleben oder Verschweißen erfolgt.

## Claims

1. Plate-like filter insert composed of web material folded in a zigzag-like manner, in particular for vehicle cab air filters, with side seals (S) on the end faces of the folds and with end seals (E) at the fold ends located in the folding direction, in which filter insert, when the latter is inserted into a filter housing, at least the end seals are sealed off relative to the filter housing in the plate plane, characterized in that the end seals (E) are each formed by a U-profile strip (3) with a U-slot (4) oriented perpendicularly to the filter-plate plane and by an end half-fold, an end fold or a plurality of end folds inserted into the U-slot and lying in a manner such as to be clamping-free and non-braced, and in that the end faces of the U-profile strips (3) are connected to the side seals (S).

2. Filter insert according to Claim 1, characterized in that an integral part of the side seals (S) is a foil tape (2) fixedly and sealingly applied to the end edges of the folds and of the U-profile strips (3).

3. Method for producing a filter insert according to Claim 2, characterized by the features,
- folded web material (1) sealed off on the end faces by means of the foil tape (2) is cut to a length corresponding to the filter insert to be made,
- in each case the U-profile strips (3) are slipped onto the end half-fold, end fold or plurality of end folds and are fixedly connected with their end faces to the foil tape (2).

4. Method according to Claim 3, characterized in that the fixed connection of the U-profile strip (3) to the foil tape (2) located on the end faces is made by adhesive bonding or welding.

## Revendications

1. Elément filtrant en forme de plaque constitué de matière en bande pliée en zigzag, en particulier pour filtre à air d'habitacle de véhicule, comportant des joints d'étanchéité latéraux (S) sur les côtés frontaux des plis et des joints d'étanchéité d'extrémité (E) aux extrémités des plis situées dans la direction de pliage, dans lequel au moins les joints d'étanchéité d'extrémité, dans le cas d'un montage de l'élément filtrant dans un boîtier de filtre, sont étanchés dans le plan de la plaque vis-à-vis de ce boîtier, caractérisé par le fait que les joints d'étanchéité d'extrémité (E) sont formés chacun par une barrette à profil en U (3) à fente du U (4) orientée perpendiculairement au plan de la plaque filtrante et un demi-pli, un pli ou plusieurs plis d'extrémité engagé(s) et situé(s) sans serrage ni contrainte dans la fente du U, et que les côtés frontaux des barrettes à profil en U (3) sont joints aux joints d'étanchéité latéraux (S).

2. Etément filtrant selon la revendication 1, caractérisé par le fait qu'un élément des joints d'étanchéité latéraux (S) est une bande de feuille (2) appliquée solidement et de manière étanche sur les bords frontaux des plis et des barrettes à profil en U (3).

3. Procédé de fabrication d'un élément filtrant selon la revendication 2, caractérisé par les caractéristiques suivantes :
- on coupe de la matière en bande pliée (1) étanchée frontalement avec la bande de feuille (2) à une longueur correspondant à l'élément filtrant à fabriquer,
- on applique les barrettes à profil en U (3) chacune sur le demi-pli, le pli ou plusieurs plis d'extrémité et les joint solidement par leurs côtés frontaux à la bande de feuille (2).

4. Procédé selon la revendication 3, caractérisé par le fait que la jonction solide de la barrette à profit en U (3) à la bande de feuille (2) placée frontalement est faite par collage ou soudage.
